Europäisches Patentamt

European Patent Office    (11) Numéro de publication: **0 261 500**

Office européen des brevets    **A1**

(12) **DEMANDE DE BREVET EUROPEEN**

(21) Numéro de dépôt: **87113149.6**    (51) Int. Cl.⁴: **G01B 5/00**

(22) Date de dépôt: **09.09.87**

(30) Priorité: **11.09.86 FR 8612833**

(43) Date de publication de la demande:
**30.03.88 Bulletin 88/13**

(84) Etats contractants désignés:
**AT BE CH DE ES FR GB IT LI SE**

(71) Demandeur: **DYNAFER S.A.**
**14, rue Cernil-Antoine**
**CH-2300 La Chaux-de-Fonds(CH)**

(72) Inventeur: **Beaumann, Fernand**
**Rue Bournot 17**
**CH-2400 Le Locle(CH)**

(74) Mandataire: **Caron, Gérard et al**
**ICB Ingénieurs Conseils en Brevets SA**
**Passage Max. Meuron 6**
**CH-2001 Neuchâtel(CH)**

(54) **Equipement de mesure des dimensions de pièces mécaniques.**

(57) Cet équipement de mesure comporte un support (1) sur lequel sont aménagés deux posages (5, 6) permettant de recevoir chacun une pièce (P1, P2) à mesurer. Un palpeur de mesure (B) est monté à pivotement et à coulissement sur le support de mesure afin que sa tige de palpage (B2) puisse relever successivement une dimension des pièces (P1, P2). Le déplacement du palpeur (B) se fait manuellement au moyen d'une manoeuvre simple.

Ainsi, moyennant un seul palpeur et son appareillage associé (C, D), l'on peut rapidement effectuer deux mesures distinctes.

Application à la mesure de dimensions en micromécanique.

Fig.1

EP 0 261 500 A1

# EQUIPEMENT DE MESURE DES DIMENSIONS DE PIECES MECANIQUES

La présente invention concerne les équipements de mesure de dimensions.

Pour mesurer les dimensions de pièces mécaniques, on utilise habituellement des équipements de mesure comprenant un support de pièce et un palpeur muni d'une tige de palpage destinée à venir au contact de la pièce pour la mesure et d'un système transducteur fournissant un signal de mesure dépendant de la position de la tige de palpage dans le palpeur. L'équipement comporte également un dispositif d'affichage capable de transformer le signal de mesure en une indication observable.

Avec un tel équipement, on peut commodément mesurer successivement une même dimension de plusieurs pièces identiques sans modifier le réglage initial du support et l'étalonnage (réglage du zéro) du dispositif d'affichage. Par contre, si pour une série de pièces, on désire contrôler deux dimensions (une longueur et un diamètre d'une tige cylindrique, par exemple), il faut à chaque fois modifier le réglage du support et l'étalonnage du dispositif de mesure, à moins de faire deux séries de mesures successives (l'une pour la longueur des tiges et l'autre pour leur diamètre).

Pour remédier à cette difficulté, il est évidemment possible de prévoir deux équipements semblables côte-à-côte, l'un réglé et étalonné pour la première mesure et l'autre adapté à la seconde. Cependant, ceci double le coût de l'installation.

L'invention a pour but de fournir un équipement de mesure permettant d'effectuer plusieurs mesures de dimensions différentes d'une pièce mécanique, avec une grande commodité d'emploi, alors que le coût de l'équipement reste très inférieur à celui de plusieurs équipements identiques.

L'invention a donc pour objet un équipement de mesure de dimensions de pièces mécaniques, comportant un support de mesure, des moyens solidaires de ce support pour positionner les pièces à mesurer sur au moins deux posages distincts, un palpeur servant à relever les dimensions des pièces au moyen d'une tige de palpage destinée à venir en contact avec celles-ci, ledit palpeur étant capable, en fonction de la position de ladite tige, de fournir un signal de mesure, et des moyens connectés à ce palpeur pour exploiter le signal de mesure et afficher la valeur de la dimension relevée. Le palpeur est monté mobile sur le support au moyen d'un organe de montage, monté pivotant sur un chariot monté lui-même coulissant sur ce support pour pouvoir coopérer sélectivement avec chacun desdits posages et effectuer sur chacun d'eux une mesure différente.

Il résulte de ces caractéristiques que deux mesures successives peuvent être effectuées sur deux pièces distinctes, ou sur une pièce déplacée d'un posage sur l'autre, par une simple rotation-translation du palpeur de mesure. De ce fait, l'équipement peut ne comporter qu'un seul palpeur relié à un seul appareil d'exploitation et d'affichage. En outre, pour les deux mesures, l'équipement n'a besoin que d'un seul étalonnage du zéro de mesure, étant donné que les références associées respectivement à chacun des posages peuvent être réglées de telle manière qu'elles donnent toutes deux une indication de zéro sur le dispositif d'affichage. L'opération de mesure peut donc considérablement être simplifiée par rapport au cas où on utilise un équipement complet distinct pour chaque type de mesure.

L'invention sera mieux comprise à l'aide de la description qui va suivre d'un mode de réalisation particulier choisi à titre d'exemple. Sur les dessins annexés:

-la figure 1 est une vue en élévation frontale d'un équipement suivant l'invention;

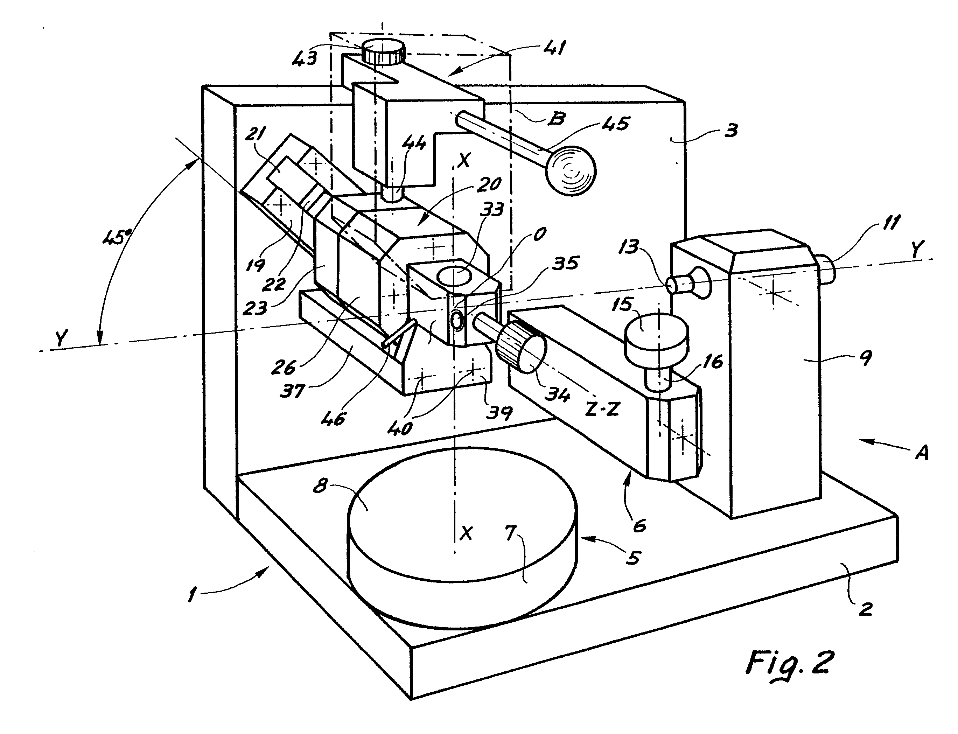

-la figure 2 en est une vue en perspective;

-la figure 3 est une vue en élévation frontale de l'équipement, le palpeur de mesure n'étant pas représenté;

-la figure 4 est une vue en plan, partiellement en coupe, suivant la ligne IV - IV de la figure 3;

-les figures 5 et 6 sont des vues en coupe prises respectivement selon les lignes V - V et VI - VI de la figure 4; et

-la figure 7 est une vue analogue à celle de la figure 1, le palpeur étant représenté dans la deuxième position de mesure.

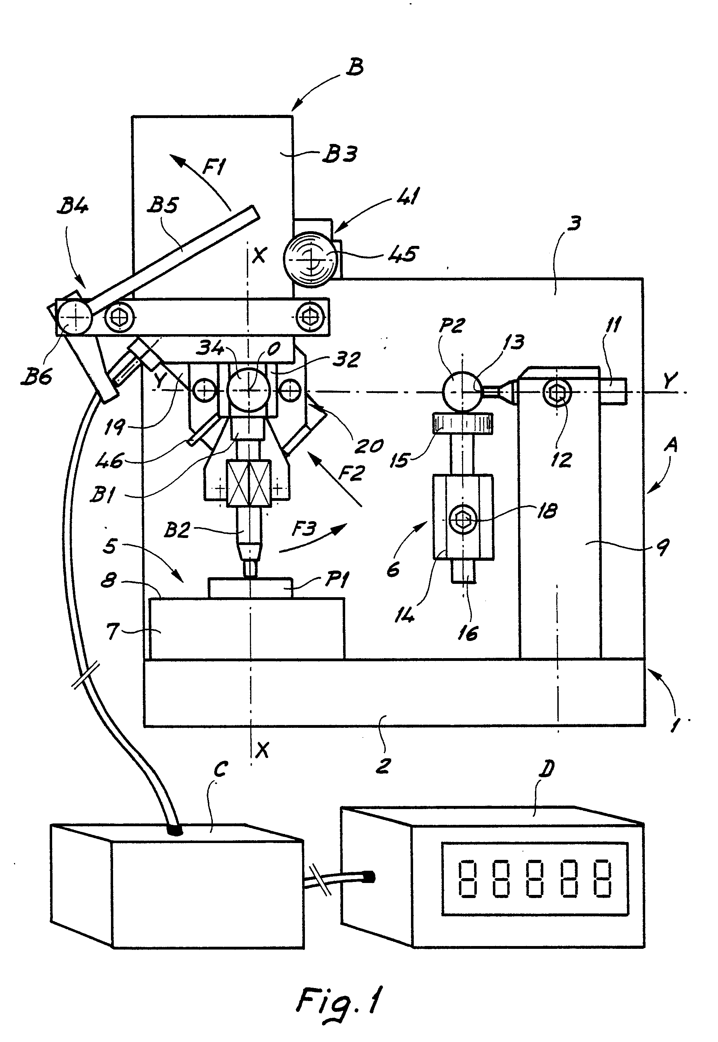

Sur la figure 1, on voit que l'équipement de mesure suivant l'invention comprend un support de mesure A sur lequel est monté un palpeur B. Ce dernier est raccordé à un appareil électronique C de mise en forme des signaux fournis par le palpeur B. Cet appareil est connecté à son tour à un compteur D permettant d'afficher le résultat de la mesure. Pour plus de détails concernant les composants B, C et D, on peut se référer à une brochure éditée par la Société Dr. Johannes Heidenhain, Postfach 1260, D-8225 Traunreut, Allemagne Fédérale. Toutefois, l'invention n'est nullement limitée à l'emploi spécifique de ces composants particuliers.

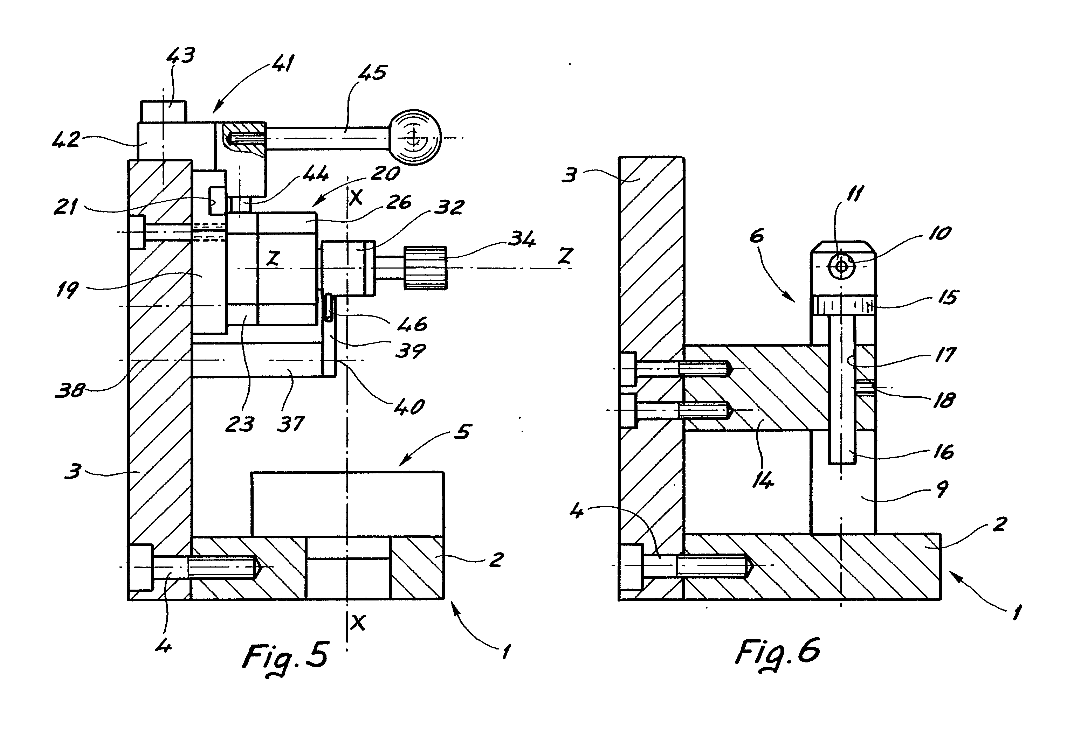

Le support de mesure A comprend un bâti 1 en forme d'équerre composé d'une plaque de base 2 et d'une plaque arrière de montage 3 fixée sur la plaque de base 2 par des vis 4 (figures 5 et 6).

A titre indicatif seulement, la plaque de base 2 peut mesurer 70 x 120 x 15mm et la plaque de montage 3, peut être de 105 x 120 x 15mm. L'équipement décrit ici à titre d'exemple est donc destiné à la mesure de petites pièces, bien que l'invention ne soit nullement limitée à l'application à la micromécanique.

Suivant l'invention, le support de mesure A comporte deux posages 5 et 6. Le premier de ces posages comprend un plateau circulaire 7 monté de façon amovible dans la plaque de base 2 et définissant une surface de référence 8 constituée ici par la surface supérieure du plateau circulaire 7. Une pièce P1 à mesurer est posée sur la surface de référence 8. Le plateau circulaire 7 définit un premier axe de mesure X - X.

Une colonnette 9 est montée sur la plaque de base 2. Elle présente un trou cylindrique 10 (figure 6), dans lequel est montée réglable une pige de référence 11 dont la position axiale peut être bloquée à l'aide d'une vis 12 engagée dans la colonnette 9. La pige de référence 11 définit un second axe de mesure Y - Y qui, dans l'exemple décrit, est perpendiculaire au premier axe de mesure X - X et situé avec celui-ci dans un même plan vertical. En outre, la face d'extrémité de la pige 11 définit une seconde surface de référence de mesure 13.

La pige de référence 11 coopère avec le second posage 6. Celui-ci comporte une console 14 qui est fixée sur la plaque de montage 3 et dans laquelle est monté réglable en hauteur un plateau circulaire 15. Ce dernier est fixé sur une tige 16 (figure 6) montée dans un trou vertical 17 pratiqué dans la console 14. Cette tige 16 peut être bloquée en position grâce à une vis latérale 18 engagée dans la console 14.

Sur la figure 1, on à représenté une pièce P2 à mesurer placée sur le plateau 15 et appuyée contre la surface de référence de mesure 13.

Un guide 19 est fixé sur la plaque de montage 3 au-dessus de la zone du support de mesure 1 dans laquelle est prévue le premier posage 5. Ce guide 19 définit un chemin de coulissement oblique pour un chariot 20 destiné à porter le palpeur de mesure B.

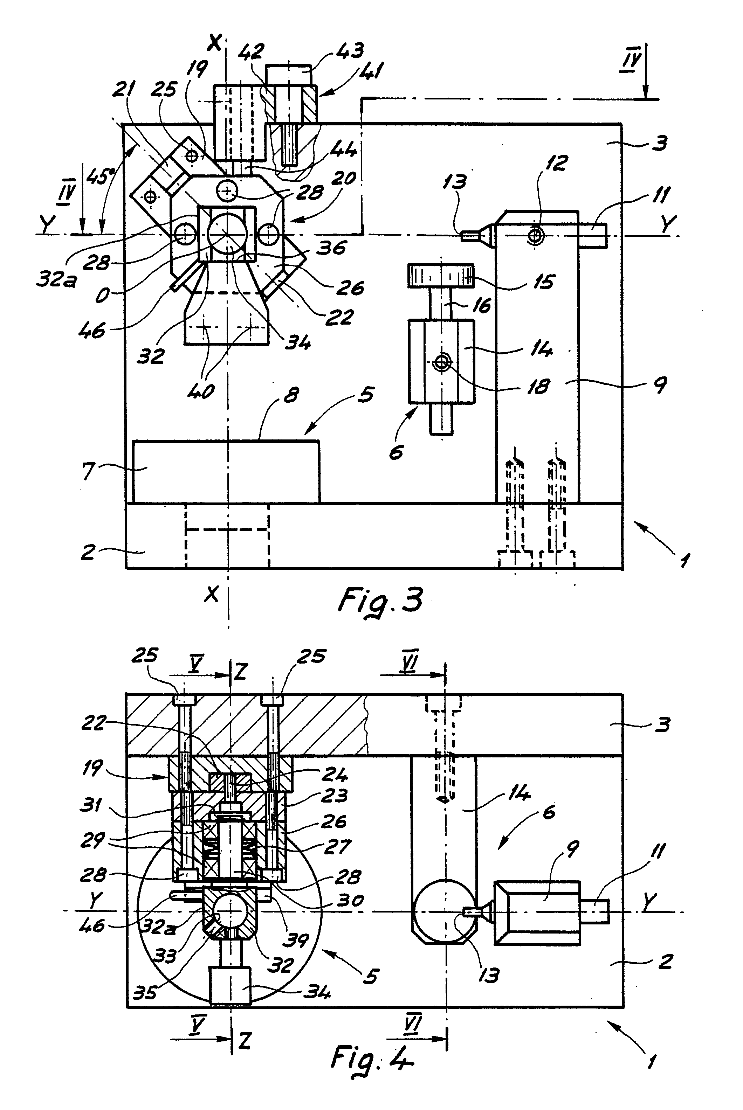

Le guide 19 (figures 3 et 4) présente une rainure rectiligne 21 à coulisse à billes dans laquelle peut se déplacer un coulisseau 22 coopérant avec cette coulisse à billes et appartenant à un châssis 23 fixé sur le coulisseau 22 à l'aide de vis 24. Le guide 19 est rapporté sur la plaque de montage 3 au moyen de vis 25.

Un manchon 26 pourvu d'un alésage cylindrique 27 est rapporté sur le châssis 22 à l'aide de vis 28.

Dans l'alésage 27 sont montés deux roulements 29 supportant à rotation libre une broche 30 qui est arrêtée par un circlips 31 prévu à l'arrière de cette broche et prenant appui contre le roulement arrière 29 correspondant. La broche 30 est faite d'une seule pièce avec un dé de montage 32 solidaire en translation du manchon 26 et faisant également partie du chariot 20. Il est pourvu d'une ouverture 33 destinée à recevoir l'embout de fixation B1 (figure 1) du palpeur de mesure B. Le dé de montage 32 est pourvu d'un bouton de manipulation 34 s'étendant vers l'avant. Un trou oblique 35 prévu dans le dé de montage 32 sert à recevoir une vis de blocage (non visible sur les dessins) destinée à serrer l'embout B1 du palpeur dans l'ouverture 33.

La broche 30 définit un axe de pivotement Z - Z pour le palpeur B. Cet axe passe par le point d'intersection 0 des axes X - X et Y - Y et est perpendiculaire au plan défini par ces axes. Par ailleurs, le chemin de guidage défini par le guide 19 est situé dans le plan bisecteur du dièdre défini par les plans X 0 Z et Y 0 Z, c'est-à-dire que, dans l'exemple représenté, le guide est incliné de 45° sur la verticale.

Il est à noter que cette disposition ne constitue qu'un cas particulier de l'invention visant un équipement de mesure dans lequel le palpeur B est utilisé avec deux posages à la fois. Cependant, on comprend que les axes X - X et Y - Y peuvent définir des angles différents de 90° (60°, par exemple) et que l'on peut multiplier le nombre de posages disposés autour de l'axe Z - Z. En pareil cas, il est avantageux de dresser cet axe verticalement, le palpeur B pivotant dans ces conditions dans un plan horizontal et les posages pouvant tous être identiques au posage 6.

En dessous du chariot 20 est prévue une butée 36 formée d'une plaquette de montage 37 fixée sur la plaque arrière 3 par des vis 38 (non détaillées), et d'une plaquette d'appui 39 vissée sur la plaquette de montage 37 par des vis 40 symbolisées par des croix sur les figures.

Le dé de montage 32 présente une forme générale cubique, de sorte qu'il comporte ainsi six faces faisant des angles de 90° entre elles. Deux de ces faces 32a peuvent sélectivement coopérer avec la butée 36 pour assurer le positionnement du palpeur B dans l'une ou l'autre de ses positions de mesure. Si les axes de mesure X - X et Y - Y sont orientés sous un angle différent de 90°, la section transversale du dé 32 perpendiculaire à l'axe Z - Z doit être un polygone dont les angles au sommet sont adaptés en conséquence.

Afin de bloquer le chariot 20 en position pour une mesure, le support de mesure 1 comporte également un verrou 41 comprenant un bloc pivotant 42 monté articulé sur le bord supérieur de la plaque de montage arrière 3, à l'aide d'une vis épaulée 43. Le bloc supporte un patin élastique 44 destiné à venir s'appuyer élastiquement contre la face du chariot 20 qui est tournée vers le haut. Le verrou 41 comporte également un levier de manipulation 45 qui s'étend vers l'avant dans la position de verrouillage du verrou 41.

Une tige 46 est vissée dans le dé 32 en faisant saillie de celui-ci à partir de l'une de ses arêtes orientée parallèlement à l'axe Z - Z dans un plan vertical qui passe par la plaquette 39 définissant la butée 36. Cette tige 46 est un élément de protection qui évite que la pointe du palpeur B ne vienne heurter les posages 5 et 6 lors de son changement de position.

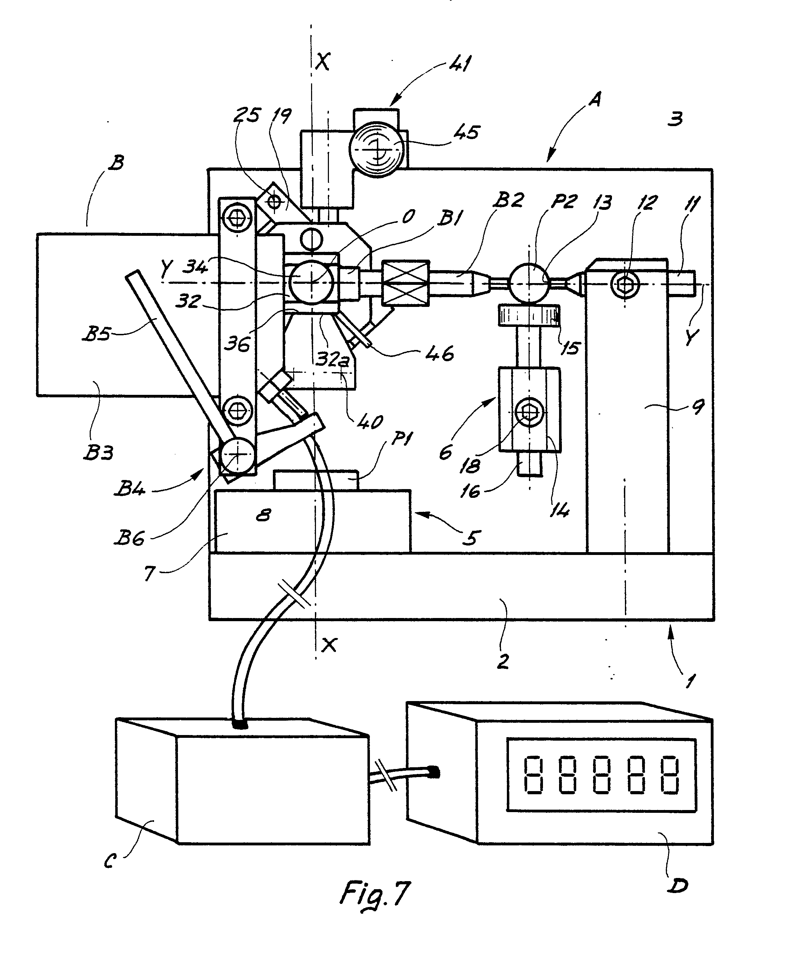

Le palpeur B, qui est ici illustré à titre d'exemple, comporte une tige de palpage B2 (figures 1 et 7) coulissant dans le boîtier B3 du palpeur. Elle est sollicitée élastiquement vers l'extérieur du boîtier par un dispositif à ressort (non visible sur les dessins) et couplée à un système transducteur (également non visible) destiné à transformer la variation de position de la tige en un signal de mesure électrique exploitable par l'appareil électronique de mise en forme C. Pour "relever" la tige de palpage B2, c'est-à-dire pour la faire rentrer provisoirement dans le boîtier B3, la faire sortir ensuite et la mettre en contact avec la pièce à mesurer (par exemple les pièces P1 et P2), le palpeur B est muni d'un dispositif de relevage manuel B4. Ce dernier comporte notamment un levier d'actionnement B5 qui, lorsqu'on le fait pivoter autour d'un axe de rotation B6 dans le sens de la flèche F1, provoque la rentrée de la tige de palpage B2 à l'encontre de l'action du dispositif à ressort.

Une description détaillée du dispositif de relevage B4 peut être trouvée dans la demande de brevet déposée ce jour au nom de la Demanderesse et ayant pour titre: "Palpeur de mesure de dimensions".

L'équipement de mesure selon l'invention fonctionne de la façon suivante.

On suppose que l'on veuille mesurer une pièce P1 qui est une pastille dont on désire connaître l'épaisseur. La pièce P2 est supposée être une barrette dont on souhaite connaître le diamètre. Bien entendu, cet exemple n'est nullement limitatif car l'équipement peut être utilisé également notamment pour la mesure de deux dimensions différentes d'une même pièce, la première mesure étant faite alors que la pièce se trouve sur la surface 8 et la deuxième étant réalisée pendant que la même pièce se trouve sur le plateau 15, après avoir été transférée du posage 5 au posage 6.

La figure 1 représente la première position de mesure dans laquelle l'axe de la tige de palpage B2 coïncide avec l'axe X - X, tandis que, dans la seconde position, représentée à la figure 7, cet axe coïncide avec l'axe Y - Y. Pour passer d'une position à l'autre, les manipulations suivantes sont effectuées:

-pivotement du verrou 41 pour écarter le tampon élastique 44 du chariot 20;

-coulissement du chariot 20 obliquement vers le haut le long du guide 19 (flèche F2), moyennant quoi l'axe Z - Z effectue une translation parallèle à lui-même; le coulissement doit être suffisant pour que la tige 46 puisse se dégager de la butée 36 lors du pivotement du dé de montage 32;

-pivotement de 90° du dé de montage 32 autour de l'axe Z - Z (sens de la flèche F3);

-descente oblique le long du guide 19 du chariot 20, ce qui place l'ensemble dans le seconde position de mesure représentée à la figure 7;

-pivotement du verrou 41 pour obtenir un nouveau blocage du dé 32 contre la butée 36.

Pendant le mouvement de pivotement du dé de montage 32, la tige de palpage B2 est avantageusement rentrée en actionnant le levier B5 dans le sens de la flèche F1, puis relâchée doucement contre la pièce P2.

Pour effectuer de nouveau une mesure sur le posage 5, il faut évidemment procéder en sens inverse lors du pivotement du dé de montage 32 équipé du palpeur B.

Préalablement à la mesure proprement dite, l'équipement peut être étalonné en suivant le même processus pour passer d'une mesure à l'autre, mais en l'absence des pièces P1 et P2. On peut alors régler le zéro commun pour les deux posages 5 et 6 en choisissant un plateau 7 approprié et/ou en réglant la disposition de la pige de référence 11.

On constate donc que l'équipement de mesure suivant l'invention permet de relever successivement et commodément deux dimensions, soit sur une même pièce soit sur des pièces différentes en employant le même étalonnage à zéro du compteur D et en n'utilisant qu'un seul palpeur de mesure et ses appareils annexes.

**Revendications**

1. Equipement de mesure de dimensions de pièces mécaniques (P1, P2) comportant un support de mesure (1), des moyens (5, 6) solidaires de ce support pour positionner les pièces à mesurer (P1, P2) sur au moins deux posages distincts (5, 6), un palpeur (B) servant à relever les dimensions des pièces au moyen d'une tige de palpage (B2) destinée à venir en contact avec celles-ci, ledit palpeur (B2) étant capable, en fonction de la position de la tige de palpage de fournir un signal de mesure, et des moyens (C, D) connectés à ce palpeur (B) pour exploiter le signal de mesure et afficher la valeur de la dimension relevée, caractérisé en ce que ledit palpeur (B) est monté mobile sur le support (1) au moyen d'un organe de montage (32), monté pivotant sur un chariot (20) monté lui-même coulissant sur ce support (1) pour pouvoir coopérer sélectivement avec chacun desdits posages (5, 6) et effectuer successivement sur chacun d'eux ùne mesure différente.

2. Equipement de mesure suivant la revendication 1, caractérisé en ce que ledit organe de montage (32) présente des faces latérales d'appui (32a) parallèlement à son axe de pivotement (Z - Z) et en ce que ledit support (1) comporte une butée (36) sur laquelle ces faces latérales viennent sélectivement s'appuyer dans les positions respectives de mesure du palpeur (B).

3. Equipement de mesure suivant la revendications 2, caractérisé en ce qu'il comporte un verrou (41) destiné à appuyer ledit organe de montage (32) sur ladite butée (36) dans les positions respectives de mesure du palpeur (B).

4. Equipement suivant l'une quelconque des revendications 1 à 3, caractérisé en ce qu'au moins l'un des posages (5, 6) est réglable par rapport audit support et présente une surface (13) à position réglable pour servir de référence de zéro à la mesure sur ce posage (6).

5. Equipement suivant l'une quelconque des revendications 2 à 4, caractérisé en ce que les faces latérales d'appui (32a) de l'organe de montage (32) font un angle de 90° entre elles.

6. Equipement suivant la revendication 5, caractérisé en ce que ledit organe de montage (32) est monté sur ledit support (1) au moyen d'un guide (19) définissant un chemin de coulissement pour ledit chariot (20) qui est incliné de 45° par rapport auxdites faces d'appui (32a) lorsque l'organe de montage est appuyé sur ladite butée (36).

0 261 500

Fig.1

Fig.2

0 261 500

Fig. 3

Fig. 4

Fig.5

Fig.6

0 261 500

Fig.7

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 500 924 (P.M. LAGARRIGUE) <br> * En entier * <br> --- | 1 | G 01 B 5/00 |
| A | DE-A-2 708 248 (MORA) <br> * Pages 6-8; figures * <br> --- | 1,2,5 | |
| A | DE-C- 326 470 (FORTUNA) <br> * En entier * <br> --- | 1,4 | |
| A | US-A-2 516 053 (J.W. FARKAS) <br> * Colonne 4, lignes 12-73; figures * <br> --- | 1 | |
| A | FR-A-2 425 700 (PETIT) <br> * Page 3, lignes 17-20; page 4, ligne 22 - page 5, ligne 20; figures * <br> ----- | 1 | |

| | DOMAINES TECHNIQUES RECHERCHES (Int. Cl.4) |
|---|---|
| | G 01 B |

Le présent rapport a été établi pour toutes les revendications

| Lieu de la recherche | Date d'achèvement de la recherche | Examinateur |
|---|---|---|
| LA HAYE | 17-12-1987 | RAMBOER P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
……………………………
& : membre de la même famille, document correspondant